# EUROPEAN PATENT APPLICATION

(11) **EP 4 611 236 A1**
(43) Date of publication of application: **03.09.2025**
(21) Application number: 23882683.8
(22) Date of filing: 25.10.2023
(51) Int. Cl.: H02K 15/03, H02K 15/12

(54) **MOTOR CORE MANUFACTURING METHOD AND MOTOR CORE MANUFACTURING DEVICE**

(30) Priority: 26.10.2022 JP 2022171626
(71) Applicant: NHK Spring Co., Ltd., Kanagawa 236-0004 (JP)
(72) Inventor: OHMORI, Makoto, Yokohama-shi, Kanagawa 236-0004 (JP); SATO, Kei, Yokohama-shi, Kanagawa 236-0004 (JP); FURUYA,Takumi, Yokohama-shi, Kanagawa 236-0004 (JP); KINOSHITA, Jun, Yokohama-shi, Kanagawa 236-0004 (JP)
(74) Representative: DREISS Patentanwälte PartG mbB
(86) International application number: PCT/JP2023/038521
(87) International publication number: WO 2024/090479

(57) **Abstract**

A motor core manufacturing method according to the present disclosure includes: a step of holding a motor core including a resin filling portion in a mold in which a resin filling path is formed such that the resin filling path is communicated with the resin filling portion; a step of conveying a resin kneaded body at least partially containing a granular resin composition toward a chamber communicated with the resin filling path using an extruder that conveys a powdery resin composition while kneading the powdery resin composition so as to form the resin kneaded body; a step of heating and softening the resin kneaded body conveyed into the chamber; a step of operating a plunger movable in the chamber to fill a softened resin obtained by softening the resin kneaded body in the chamber into the resin filling portion; and a step of curing the softened resin filled in the resin filling portion.

## Description

### Technical Field

The present disclosure relates to a motor core manufacturing method and a motor core manufacturing apparatus.

### Background Art

Some rotary electric machines include a motor core, for example, a rotor core, to which a permanent magnet is attached. As described above, when a permanent magnet is attached to a motor core, there is known a method in which the permanent magnet is inserted into a slot formed in the motor core, and then a resin composition is filled into a periphery of the permanent magnet and cured (see, for example, JP 2021 087296 A).

JP 2021 087296 A discloses a resin injection apparatus that injects a resin material into a magnet housing portion of a motor core, the resin injection apparatus including a plasticizing cylinder into which a solid resin material is introduced and a screw disposed in the plasticizing cylinder. JP 2021 087296 A also discloses that by rotating the screw while heating the plasticizing cylinder and the screw, the solid resin material is melted and conveyed into a cylinder including a plunger for conveying the resin material to the magnet housing portion of the motor core.

### SUMMARY OF INVENTION

### Technical Problem

In the apparatus described in JP 2021 087296 A, the solid resin material is melted in the plasticizing cylinder and then conveyed into the cylinder including a plunger. As described above, when the resin composition (resin material) is completely melted to a highly flowable state before being conveyed to the cylinder, a curing reaction of the resin composition proceeds, and fluidity of the resin composition when the resin composition is conveyed from the cylinder to the magnet housing portion of the motor core decreases.

In view of the above-described problems, the present disclosure provides a motor core manufacturing method and a motor core manufacturing apparatus, in which a decrease in fluidity due to a progress of a curing reaction of a resin composition is suppressed.

### Solution to Problem

A motor core manufacturing method according to a first aspect of the present disclosure includes: a step of holding a motor core including a resin filling portion in a mold in which a resin filling path is formed such that the resin filling path is communicated with the resin filling portion; a step of conveying a resin kneaded body at least partially containing a granular resin composition toward a chamber communicated with the resin filling path using an extruder that conveys a powdery resin composition while kneading the powdery resin composition so as to form the resin kneaded body; a step of heating and softening the resin kneaded body conveyed into the chamber; a step of operating a plunger movable in the chamber to fill a softened resin obtained by softening the resin kneaded body in the chamber into the resin filling portion; and a step of curing the softened resin filled into the resin filling portion.

In the motor core manufacturing method as described above, since the resin conveyed toward the chamber using the extruder is a resin kneaded body at least partially containing a granular resin composition, the resin can be softened in the chamber, and it is possible to suppress the resin from being unintentionally cured before the resin is filled into the resin filling portion.

A motor core manufacturing method according to a second aspect of the present disclosure is the motor core manufacturing method according to the first aspect of the present disclosure, in which the motor core is configured by a rotor core, and the resin filling portion is configured by one or more slot portions formed along an axial center direction of the rotor core, into which a permanent magnet can be inserted, and the method further includes a step of inserting the permanent magnet into the slot portion of the rotor core.

In the motor core manufacturing method as described above, the permanent magnet can be fixed in the slot portion.

A motor core manufacturing method according to a third aspect of the present disclosure is the motor core manufacturing method according to the first or second aspect of the present disclosure, further including a step of heating the powdery resin composition conveyed into the extruder.

In the motor core manufacturing method as described above, the temperature of the resin in the extruder can be forcibly raised, and at least a part of the powdery resin composition conveyed in the extruder can be stably formed into a granular resin composition.

A motor core manufacturing method according to a fourth aspect of the present disclosure is the motor core manufacturing method according to any one of the first to third aspects of the present disclosure, further including a step of preheating at least one of the mold or the motor core.

In the motor core manufacturing method as described above, the resin filled into the resin filling portion can be cured in a short time by preheating the mold and the rotor core.

A motor core manufacturing apparatus according to a fifth aspect of the present disclosure includes: a mold configured to hold a motor core including a resin filling portion; a chamber formed in the mold and having one end communicated with a resin filling path communicated with the resin filling portion; an extruder configured to convey a powdery resin composition toward the chamber while kneading the powdery resin composition; a plunger movable in the chamber; a heater disposed in the mold and around the chamber; and a control device configured to control at least the extruder, the plunger, and the heater to perform each step of the motor core manufacturing method according to any one of the first to fourth aspects.

In the motor core manufacturing apparatus as described above, since the resin conveyed toward the chamber using the extruder is a resin kneaded body at least partially containing a granular resin composition, the resin can be softened in the chamber, and it is possible to suppress the resin from being unintentionally cured before the resin is filled into the resin filling portion.

### Advantageous Effects of Invention

According to the motor core manufacturing method and the motor core manufacturing apparatus of the present disclosure, it is possible to suppress a decrease in fluidity due to a progress of a curing reaction of a resin composition.

### BRIEF DESCRIPTION OF DRAWINGS

Fig. 1 is a schematic explanatory view illustrating an example of a motor core manufacturing apparatus according to a first embodiment of the present disclosure.
Fig. 2 is a graph illustrating an example of a relationship between temperature and viscosity of a resin used in the motor core manufacturing apparatus illustrated in Fig. 1.
Fig. 3 is a flowchart illustrating an example of a manufacturing process performed by the motor core manufacturing apparatus illustrated in Fig. 1.
Fig. 4A is an operation explanatory diagram illustrating an example of an operation state of the motor core manufacturing apparatus illustrated in Fig. 1.
Fig. 4B is an operation explanatory diagram illustrating an example of an operation state of the motor core manufacturing apparatus illustrated in Fig. 1.
Fig. 5A is an operation explanatory diagram illustrating an example of an operation state of the motor core manufacturing apparatus illustrated in Fig. 1.
Fig. 5B is an operation explanatory diagram illustrating an example of an operation state of the motor core manufacturing apparatus illustrated in Fig. 1.
Fig. 6A is an operation explanatory diagram illustrating an example of an operation state of the motor core manufacturing apparatus illustrated in Fig. 1.
Fig. 6B is an operation explanatory diagram illustrating an example of an operation state of the motor core manufacturing apparatus illustrated in Fig. 1.
Fig. 7 is a schematic explanatory view illustrating an example of a state in which a rotor core and a permanent magnet are measured.
Fig. 8A is a schematic enlarged view illustrating a modification of the extruder illustrated in Fig. 1.
Fig. 8B is a schematic enlarged view illustrating a modification of the extruder illustrated in Fig. 1.
Fig. 9 is a schematic plan view illustrating an example of a motor core manufacturing apparatus according to a second embodiment of the present disclosure.
Fig. 10 is a schematic cross-sectional view taken along line A-A in Fig. 9.

### DESCRIPTION OF EMBODIMENTS

This application is based on Japanese Patent Application No. 2022-171626 filed on October 26, 2022 in Japan, the contents of which form a part thereof as the contents of this application.

In addition, the present disclosure will be more fully understood by the following detailed description. Further scope of application of the present application will be apparent from the following detailed description. However, the detailed description and specific examples are preferred embodiments of the present disclosure and are described only for the purpose of explanation. This is because various changes and modifications are apparent to those skilled in the art within the spirit and scope of the present disclosure from this detailed description.

The applicant does not intend to present any of the described embodiments to the public, and among the disclosed modifications and alternatives, modifications and alternatives that may not be included literally in the scope of the claims are also included in the invention under the doctrine of equivalents.

Hereinafter, embodiments for carrying out the present disclosure will be described with reference to the drawings. Note that, in the following, a range necessary for description for achieving the object of the present disclosure will be schematically illustrated, a range necessary for description of a corresponding portion of the present disclosure will be mainly described, and portions for which description is omitted will be based on known techniques. In addition, members that are the same as or correspond to each other in the drawings are denoted by the same or similar reference numerals, and redundant description is omitted. Furthermore, in a case where a plurality of members that are the same as or corresponding to each other is included in one drawing, only some of the members may be denoted by reference numerals in order to make the drawing easy to see.

### (First embodiment)

### <Motor core manufacturing apparatus>

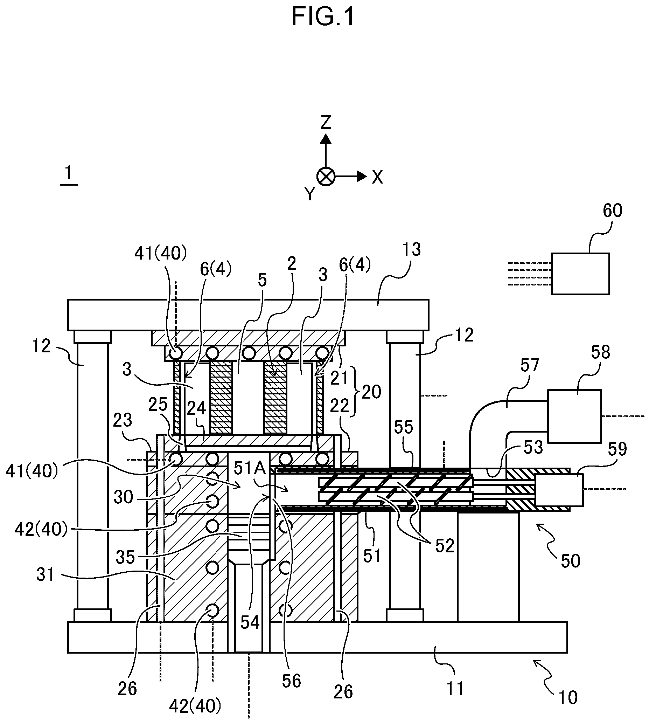

Fig. 1 is a schematic explanatory view illustrating an example of a motor core manufacturing apparatus according to a first embodiment of the present disclosure. A motor core manufacturing apparatus 1 according to the present embodiment may be an apparatus for attaching a permanent magnet 3 to a slot portion 4 formed in a motor core, for example, an inner rotor type rotor core 2. The permanent magnet 3 may be attached by resin molding. Note that, in the present embodiment, the rotor core 2 is exemplified as a motor core, and the slot portion 4 (more strictly, a filling space 6) of the rotor core 2 is exemplified as an example of a resin filling portion included in the motor core, but the present disclosure is not limited thereto. Specifically, the motor core manufacturing apparatus 1 can also be used, for example, for resin-molding a portion of a stator core or the like as a motor core around which a coil is wound, or for filling a resin into a through hole or the like formed in a laminated core without caulking in an axial direction to integrally fix the laminated core. In addition, in the following description, in order to facilitate understanding thereof, the X direction illustrated in Fig. 1 may be referred to as a left-right direction, the Y direction may be referred to as a front-rear direction, and the Z direction may be referred to as a height direction (or a vertical direction).

A resin P used in the motor core manufacturing apparatus 1 according to the present embodiment can be formed of a thermosetting resin composition. More specifically, the resin P may mainly contain a thermosetting resin such as an epoxy resin, a phenol resin, an unsaturated polyester resin, or a cyanate resin. In addition, a curing agent, a filler, or the like may be added to the resin P in addition to the thermosetting resin composition. Note that, in the following description, various resins (specifically, a powdery resin composition P1, a resin kneaded body P2, a softened resin P3, and a cured resin P4) are described according to a form of the resin, but the "resin P" is used as a general term for these resins.

As illustrated in Fig. 1, the motor core manufacturing apparatus 1 according to the present embodiment includes at least a mold 20 capable of holding the rotor core 2, a chamber 30 communicating with a resin filling path 25 formed in the mold 20, a plunger 35 movable in the chamber 30, a heater 40 disposed in the mold 20 and around the chamber 30, an extruder 50 capable of conveying the resin P toward the chamber 30, and a control device 60 capable of controlling the above-described components, specifically, at least the plunger 35, the heater 40, and the extruder 50. In addition, the above-described components can be housed in the manufacturing apparatus body 10 or attached to appropriate positions of the manufacturing apparatus body 10.

The manufacturing apparatus body 10 may include a base 11, a plurality of (for example, four) support columns 12 erected on a surface of the base 11, and a top plate 13 supported by end portions of the support columns 12. An upper mold 21 of the mold 20 described later may be fixed to a lower surface of the top plate 13, and the top plate 13 may be vertically raised and lowered together with the support columns 12 and the upper mold 21 using an actuator (not illustrated).

The mold 20 is a member for holding the rotor core 2. Specifically, the mold 20 can include the upper mold 21 that supports the rotor core 2 in contact with an upper portion of the rotor core 2, specifically, an upper surface of the rotor core 2, and a lower mold 22 that supports the rotor core 2 in contact with a lower portion of the rotor core 2, specifically, a lower surface of the rotor core 2. Out of these molds, the lower mold 22 may include a lower mold body 23 and a stage 24 which is disposed on the lower mold body 23 and on which the rotor core 2 is placed. The rotor core 2 can be placed on the stage 24 or conveyed from the stage 24 to any position by a robot arm (not illustrated) or the like.

The resin filling path 25 for supplying the resin P to an appropriate position of the rotor core 2 placed on the stage 24 may be formed in the stage 24. A path structure of the resin filling path 25 is preferably changed according to a structure of the rotor core 2 placed on the stage 24. In this regard, preferably, a plurality of stages 24 having different structures of the resin filling path 25 is prepared in advance, and appropriately changed and used according to the size of the rotor core 2 held in the mold 20, the position of the slot portion 4, and the like. In addition, the lower mold 22 may further include a lifter 26 that raises and lowers the stage 24, for example, in order to clean the resin filling path 25. Note that, in the present embodiment, an aspect is exemplified in which the resin filling path 25 is formed in the lower mold 22 and the resin P is filled thereinto from a lower side, but the present invention is not limited thereto. For example, an aspect may be adopted in which the resin filling path is formed in the upper mold 21, and the resin P is filled thereinto from above.

In addition, the upper mold 21 may be movable in the vertical direction together with the top plate 13 as described above. The upper mold 21 is lowered when the rotor core 2 is placed on the stage 24, and presses an upper surface of the rotor core 2 with a predetermined pressing force, whereby the rotor core 2 can be held so as to be sandwiched between the upper mold 21 and the lower mold 22. The shapes, materials, and the like of surfaces of the upper mold 21 and the stage 24 in contact with the rotor core 2 are preferably adjusted such that the resin P does not leak out of the rotor core 2 at the time of filling the resin P described later, in other words, contact surfaces of the upper mold 21 and the stage 24 are in a sealed state when the rotor core 2 is sandwiched therebetween. In addition, in the present embodiment, as described above, the structure in which the upper mold 21 is vertically moved together with the top plate 13 is adopted, but other structures can be adopted as long as vertical positions of the upper mold 21 and the lower mold 22 can be relatively changed. Specifically, for example, instead of moving the upper mold 21 in the vertical direction, a structure in which the lower mold 22 is moved in the vertical direction or both the upper mold 21 and the lower mold 22 are moved in the vertical direction may be adopted.

In the present embodiment, as the slot portion 4 of the rotor core 2, a rectangular parallelepiped portion that is open in the vertical direction and has substantially no gap in the front-rear direction and the left-right direction is exemplified. Therefore, the upper mold 21 and the lower mold 22 have substantially flat contact surfaces, but the shapes of the contact surfaces of the upper mold 21 and the lower mold 22 can be appropriately changed according to the shape of the rotor core 2 to be held. For example, when the motor core manufacturing apparatus 1 according to the present embodiment is used for resin molding of an inner rotor type stator core, molds including protrusions to be inserted into a space formed at a center of the stator core are preferably adopted as the upper mold 21 and the lower mold 22.

The rotor core 2 held by the mold 20 described above can be constituted by, for example, a substantially cylindrical magnetic body formed by laminating a plurality of thin electromagnetic steel sheets. A through hole 5 into which a shaft constituting a rotating shaft is inserted when the rotor core 2 is assembled as a motor may be formed in an axial center portion of the rotor core 2. In addition, one or more slot portions 4 extending along the axial center direction of the rotor core 2 may be formed so as to surround the through hole 5. The slot portion 4 can be formed in, for example, a rectangular parallelepiped shape, but a specific shape thereof is not particularly limited as long as the slot portion 4 has a shape into which the permanent magnet 3 described later can be inserted. In addition, the number of the slot portions 4 is not particularly limited, and may be, for example, about 10 to 40.

The permanent magnet 3 may be inserted into and fixed to the slot portion 4 of the rotor core 2. The permanent magnet 3 can be formed of, for example, a rectangular parallelepiped slightly smaller than the slot portion 4. In addition, it does not matter whether or not the permanent magnet 3 is magnetized at the time of being inserted into the slot portion 4. When the permanent magnet 3 is inserted into the slot portion 4, a gap is formed at least partially between an outer peripheral surface of the permanent magnet 3 and an inner peripheral surface of the slot portion 4. This gap can function as the filling space 6 as an example of the resin filling portion. When the rotor core 2 is placed on the stage 24, a part of each of the plurality of filling spaces 6 can communicate with an end of the resin filling path 25.

The chamber 30 can form a space into which a predetermined amount of the resin P to be filled into the filling space 6 is introduced. The chamber 30 may be formed in a support base 31 disposed on the base 11 so as to extend in the vertical direction. An upper end of the chamber 30 may communicate with the resin filling path 25 formed in the lower mold 22 including the stage 24 disposed on the support base 31.

The plunger 35 may be a member for conveying the resin P conveyed into the chamber 30 toward the resin filling path 25. The plunger 35 according to the present embodiment may form a lower surface of the chamber 30, and may be connected to an actuator (not illustrated) and movable in the chamber 30 in the vertical direction.

The heater 40 may be constituted by a known heater or the like, and may heat an appropriate position of the manufacturing apparatus 1. The heater 40 according to the present embodiment can include a mold heater 41 disposed in the mold 20, specifically, in the upper mold 21 and the lower mold body 23, and a chamber heater 42 disposed in the support base 31 so as to be close to an outer periphery of the chamber 30. As the mold heater 41 and the chamber heater 42, a known heater, for example, an infrared heater or a sheath heater can be adopted.

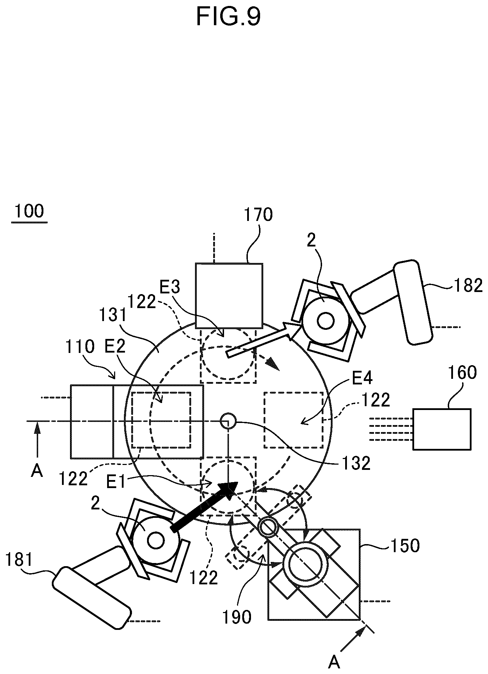

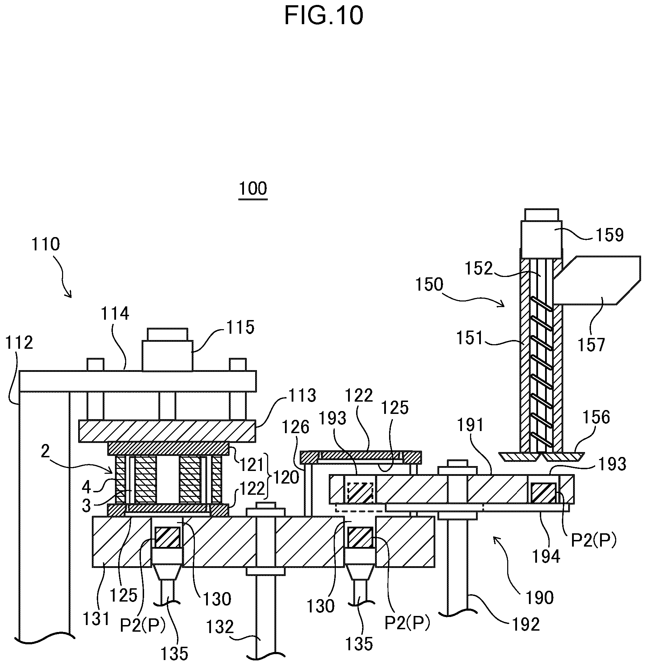

The extruder 50 may be capable of conveying a predetermined amount of the resin P while kneading the resin P toward the chamber 30. The extruder 50 may include at least a barrel 51 as an extrusion conveyance path in which the resin P is conveyed, and a screw 52 that is disposed in the barrel 51 and conveys the resin P supplied into the barrel 51, specifically, the powdery resin composition P1 as a raw material while kneading the powdery resin composition P1. In the present embodiment, as illustrated in Fig. 1, the extruder 50 extending in the left-right direction is exemplified, but the extending direction is not limited to the above, and for example, the extruder 50 may extend obliquely upward from the chamber 30 or may extend in the vertical direction such that the extruder 50 and the chamber 30 are disposed side by side (for example, as illustrated in Figs. 9 and 10 described later). When the extruder 50 and the chamber 30 are disposed side by side, a space for conveying the resin P is preferably ensured between the extruder 50 and the chamber 30.

The barrel 51 may constitute a conveyance path of the resin P extending in one direction, for example, the left-right direction. A supply port 53 to which the powdery resin composition P1 as a raw material of the resin P is supplied may be formed at one end of the barrel 51, and a carry-out port 54 connected to the chamber 30 may be formed at the other end. A resin supply path 57 may be connected to the supply port 53, and the supply port 53 may be connected to a resin supply source 58 via the resin supply path 57. In addition, for example, a sliding or rotary shutter 56 may be disposed in the carry-out port 54. Note that, in the present embodiment, the case where the resin supply path 57 extending from the resin supply source 58 is directly connected to the supply port 53 is exemplified, but the structure of the supply port 53 portion is not limited thereto. For example, a funnel opened upward may be disposed in the supply port 53, and the powdery resin composition P1 may be supplied into the barrel 51 by introducing any amount of the powdery resin composition P1 toward the funnel.

The powdery resin composition P1 supplied from the supply port 53 into the barrel 51 refers to a resin composition formed of relatively small particles (the particles also include particles such as small pieces obtained by pulverizing and crushing a relatively large resin block).

The screw 52 can be constituted by a long member having a spiral fin formed on an outer peripheral surface thereof and rotated by a motor 59 connected to one end thereof. The screw 52 may be disposed in the barrel 51 along an extending direction thereof so as to convey the powdery resin composition P1 supplied from the supply port 53 toward the carry-out port 54 while kneading the powdery resin composition P1. In addition, when the powdery resin composition P1 is continuously supplied to the screw 52, the resin P being conveyed can be pressurized. Therefore, the powdery resin composition P1 conveyed in the barrel 51 is kneaded and pressurized by the screw 52 in a course of conveyance thereof, and can be formed into the resin kneaded body P2. Here, the resin kneaded body P2 refers to the resin P in which surfaces of some of the particles constituting the powdery resin composition P1 are slightly dissolved in a course of conveyance by the extruder 50, adjacent particles are thereby welded to each other, and the powdery resin composition P1 is at least partially changed to a resin composition in a lump shape larger than the original particle (hereinafter, such a resin composition is referred to as a "granular resin composition").

The motor 59 connected to the screw 52 can adjust a conveyance amount of the resin P according to a rotation speed thereof. In this regard, the amount of the resin kneaded body P2 conveyed from the extruder 50 toward the chamber 30 in the present embodiment can be accurately adjusted by controlling the rotation speed of the motor 59 and an operation of opening and closing the shutter 56.

The extruder 50 may further include a temperature sensor (not illustrated) capable of detecting the temperature of the powdery resin composition P1 or the resin kneaded body P2 conveyed in the barrel 51 or the room temperature in the barrel 51. By considering a detection result of the temperature sensor, the temperature of the resin P conveyed in the barrel 51 can be controlled. Note that, as the extruder 50 according to the present embodiment, an extruder having two screws 52 is exemplified, but the number of screws 52 may be one or three or more.

A standby space 51A having a predetermined size without the screw 52 may be formed between the carry-out port 54 of the barrel 51 and an end (free end) of the screw 52. The standby space 51A may be a space for temporarily storing the resin kneaded body P2 kneaded and conveyed by rotation of the screw 52. In addition, in order to stabilize the shape of the resin kneaded body P2 stored in the standby space 51A, the resin kneaded body P2 conveyed by rotation of the screw 52 can be pressed against the shutter 56 disposed downstream of the standby space 51A. The resin kneaded body P2 sequentially pressed against the shutter 56 can be compressed and molded into a shape along the inner diameter shape of the barrel 51. The compressed and molded resin kneaded body P2 conveyed to the standby space 51A can be carried into the chamber 30 in any amount by any extrusion means, for example, by moving the screw 52 itself in a conveying direction. The supply amount of the resin kneaded body P2 can be adjusted by cutting and separating any amount of the resin kneaded body P2 by a cutting means (not illustrated) (for example, a cutter) or opening and closing the shutter 56. Note that, in the present embodiment, the case where the resin kneaded body P2 is molded by being pressed against the shutter 56 is exemplified, but the present invention is not limited thereto. Specifically, the molding can be omitted, or a molding device (not illustrated) may be disposed between the carry-out port 54 and the chamber 30, and the resin kneaded body P2 may be compression-molded into a desired shape using the molding device instead of the molding. When molding by pressing the resin kneaded body P2 against the shutter 56 is not performed, the shutter 56 is preferably omitted or caused to function as a cutting means for cutting the resin kneaded body P2.

In addition, a barrel heater 55 capable of preheating the resin P conveyed in the barrel 51 is preferably disposed at an appropriate position of the barrel 51. The barrel heater 55 can be constituted by a known heater such as an infrared heater similarly to the mold heater 41 and the like, and can be disposed, for example, so as to surround substantially the entire circumference of the barrel 51. By adopting the barrel heater 55, the resin P conveyed in the barrel 51 can be heated to a desired temperature.

The control device 60 may be a device that can implement any manufacturing process by being electrically connected to the above-described components and controlling operations thereof. For example, as indicated by the dotted line in Fig. 1, the control device 60 may be communicably connected to the components via wired or wireless communication. The control device 60 can be implemented using a sequencer (programmable logic controller, PLC) or a known computer. In addition, the control device 60 can be constituted by only one of the above-described computer and the like or a combination of a plurality selected from the computer and the like.

The control device 60 can implement the motor core manufacturing method according to the present embodiment described later by operating the above-described components. In this regard, the motor core manufacturing method according to the present embodiment can be provided in a form of a program such as software including a command for causing a computer constituting the control device 60 to perform a predetermined operation, in a form of a non-transitory recording medium storing the program, or in a form of an application program provided via a network or the like. Details of the motor core manufacturing method according to the present embodiment will be described later.

In the manufacturing apparatus 1 described above, the structure in which the carry-out port 54 of the barrel 51 is directly connected to the chamber 30 and the standby space 51A is formed adjacent to the carry-out port 54 has been exemplified, but the manufacturing apparatus of the present disclosure is not limited thereto. For example, a conveying mechanism (not illustrated) may be disposed between the carry-out port 54 of the barrel 51 and the chamber 30, and the resin kneaded body P2 may be carried into the chamber 30 by operating the conveying mechanism. Similarly, a mechanism for removing air from the resin kneaded body P2 may be additionally disposed between the carry-out port 54 of the barrel 51 and the shutter 56 or the chamber 30. The mechanism may remove air from the resin kneaded body P2 by, for example, compressing the resin kneaded body P2 or disposing a decompression chamber.

It should be particularly noted that the resin P directly or indirectly carried into the chamber 30 from the extruder 50 is not molded in advance (for example, tablet-shaped) but is the resin kneaded body P2 generated by kneading the powdery resin composition P1. In the present embodiment, since the resin P to be introduced into (or carried into) the chamber 30 is not a ready-made tablet-shaped resin molded in advance, the amount of the resin P to be introduced into the chamber 30 can be freely adjusted by controlling a rotation speed of the motor 59, an operation of opening and closing the shutter 56, and the like.

Here, when a specific amount of the resin P is to be carried into the chamber 30 using the extruder 50, if the resin P is heated at a high temperature to be in a highly flowable state before being carried into the chamber 30, there is a possibility that a curing reaction of the resin P proceeds before the resin P is filled into the filling space 6. Such a progress of an undesired curing reaction may cause variations in the supply amount of the resin P to the chamber 30, increase a frequency of cleaning the inside of the extruder 50, or stop a rotation operation of the screw 52 due to, for example, the resin P in which the curing reaction has progressed being caught between the screws 52, thereby causing various problems. In addition, the resin that has been cured due to the progress of the undesired curing reaction may partially block a filling path, for example, the resin filling path 25, and as a result, may decrease a filling property of the resin P into the filling space 6. Therefore, in order to stably fill the resin P into the filling space 6, it can be said that it is important to suppress the above-described progress of the undesired curing reaction. In the present embodiment, in consideration of the above-described points, by controlling the temperature of the resin P at the time of conveying the resin P in the extruder 50, it is intended to suppress the curing reaction of the resin P from proceeding unintentionally.

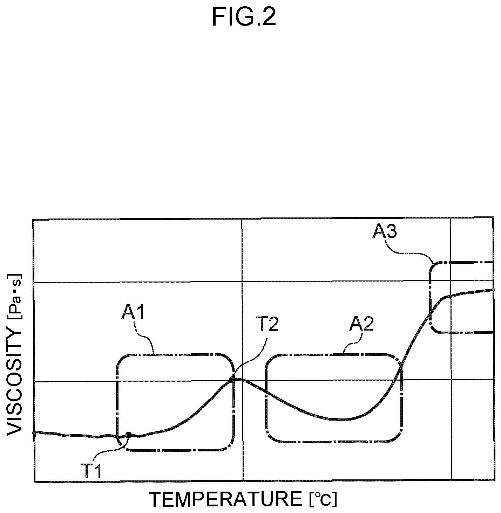

Fig. 2 is a graph illustrating an example of a relationship between temperature (°C) and viscosity (Pa•s) of a resin used in the motor core manufacturing apparatus illustrated in Fig. 1. As described above, a thermosetting resin can be used as the resin P used in the motor core manufacturing apparatus 1 according to the present embodiment described above and the motor core manufacturing method described later. Here, an example of temperature-viscosity characteristics of a resin formed of a thermosetting resin will be described with reference to Fig. 2. First, when a powdery resin is heated to a predetermined temperature (dissolution start temperature T1 in Fig. 2) at normal temperature, a part of the powdery resin, for example, a particle surface starts to be dissolved (also referred to as "fused" or "melted"), and the powdery resin particles in which a part of the surface is dissolved change to a state in which a granular resin composition in which the powdery resin particles are welded to adjacent other powdery resin particles and a powdery resin composition are mixed. When the heating further proceeds and reaches a predetermined temperature (dissolution completion temperature T2 in Fig. 2), the entire original powdery resin is melted, and the granular resin particles are welded to each other to form one large lump. When the heating further proceeds after the resin P is melted, the viscosity of the resin P decreases, the fluidity of the resin P increases, and the resin P is softened. When the heating is further performed from the softened state, a curing reaction occurs and the resin P is cured.

In consideration of the state change of the thermosetting resin described above, in the motor core manufacturing apparatus 1 and the motor core manufacturing method according to the present embodiment, a state in which the resin P conveyed in the extruder 50 is partially melted without being softened is maintained, whereby the progress of the undesired curing reaction described above is suppressed. Specifically, by maintaining the temperature of the resin P kneaded and conveyed in the extruder 50 to be lower than the dissolution completion temperature T2, the resin P before being carried into the chamber 30 is not softened.

Based on the above points, the motor core manufacturing method according to the present embodiment will be described below. In the following description of the motor core manufacturing method, a case where the rotor core 2 is manufactured using the above-described motor core manufacturing apparatus 1 will be exemplarily described.

### <Motor core manufacturing method>

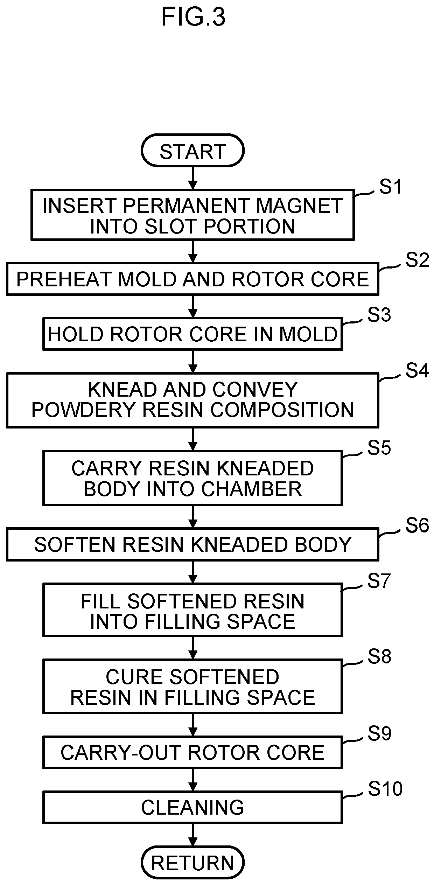

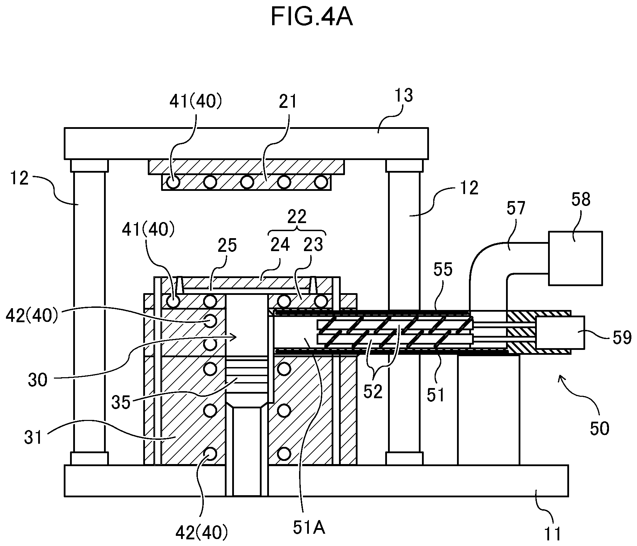

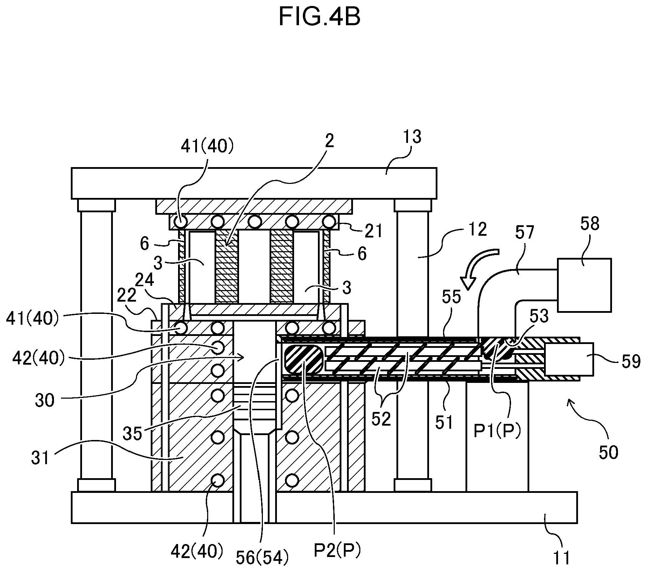

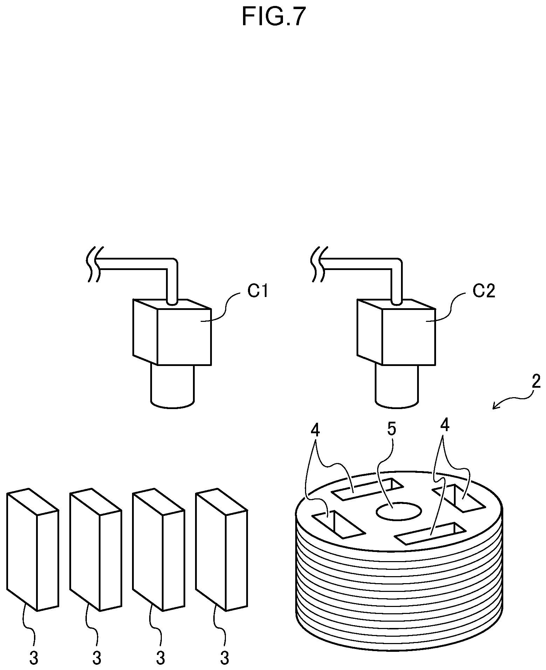

Fig. 3 is a flowchart illustrating an example of a manufacturing process performed by the motor core manufacturing apparatus illustrated in Fig. 1. Figs. 4 to 6 are operation explanatory diagrams illustrating examples of an operation state of the motor core manufacturing apparatus illustrated in Fig. 1. Fig. 7 is a schematic explanatory view illustrating an example of a state in which a rotor core and a permanent magnet are measured. Hereinafter, the motor core manufacturing method according to the present embodiment will be described mainly with reference to Figs. 3 to 6. Note that, in Figs. 4 to 6, in order to make the drawings easily viewable, those related to each operation are mainly denoted by reference numerals, and reference numerals of members less related to the operation may be omitted.

In the motor core manufacturing method according to the present embodiment, the filling amount of the resin P into the filling space 6 of the rotor core 2 may be measured as a preparation in advance. In measuring the filling amount, for example, as illustrated in Fig. 7, the volume of the slot portion 4 of the rotor core 2 and the volume of the permanent magnet 3 to be inserted into the slot portion 4 are measured using a measuring means, for example, cameras C1 and C2, and a difference therebetween is calculated, whereby the filling amount can be measured. The measured resin filling amount is sent to the control device 60, and can be used for controlling the amount of the resin P introduced into the chamber 30. Note that the means for measuring the volumes of the slot portion 4 and the permanent magnet 3 is not limited to the cameras C1 and C2 described above, and a non-contact type measurement means or a contact type measurement means (for example, a caliper) other than the cameras C1 and C2 can be appropriately used. In addition, in the present embodiment, the case where the permanent magnet 3 to be inserted into the slot portion 4 is specified in advance has been exemplified, but instead of this, the permanent magnet 3 having an appropriate size may be selected according to the size of the slot portion 4 measured by the camera C2. In this case, a clearance (that is, the filling space 6) between the slot portion 4 and the permanent magnet 3 can be made substantially equal among the slot portions 4, and the amount of the resin to be filled into each of the slot portions 4 can be made uniform.

In addition, the case where the filling amount of the resin P to be introduced into the chamber 30 is determined by measuring the volume of the slot portion 4 and the volume of the permanent magnet 3 using the cameras C1 and C2 has been exemplified, but the filling amount may be determined by another method. Specifically, for example, a trial production process may be performed before starting mass production, and the filling amount may be determined from the filling amount of the resin, the amount of excess resin, and the like in the trial production process. Alternatively, the actual resin filling amount, the excess resin, and the like may be checked at a frequency that does not interfere with mass production during mass production, and the filling amount may be feedback-controlled to maintain a suitable filling amount. In addition, the above-described various methods for determining the filling amount can be performed singly or in combination.

After the above-described preparation in advance is completed, in the motor core manufacturing method according to the present embodiment, first, the permanent magnet 3 and the rotor core 2 to which the permanent magnet 3 is attached are prepared, and the permanent magnet 3 is inserted into the slot portion 4 of the rotor core 2 (step S1). Then, the mold 20 and the rotor core 2 are preheated (step S2). The mold 20 can be preheated using, for example, a known heating means (not illustrated). The rotor core 2 may be preheated separately from the mold 20 before being placed on the stage 24, but may be preheated simultaneously with preheating of the mold 20 by operating the mold heater 41 in a state of being placed on the stage 24. When the mold 20 and the rotor core 2 are simultaneously preheated, step S3 described later is preferably performed before step S2. The preheating temperature of the mold 20 and the rotor core 2 can be set to about 100 to 180°C. Note that the preheating may be performed on only one of the mold 20 and the rotor core 2. In addition, the chamber 30 is preferably preheated together with the mold 20. The chamber 30 can be preheated by operating the chamber heater 42. Furthermore, the order of step S1 and step S2 can be changed. In this case, the (separately preheated or not preheated) permanent magnet 3 is inserted into the slot portion 4 of the rotor core after the rotor core 2 and the mold 20 are preheated.

When the preheating of the mold 20 and the rotor core 2 is completed, as illustrated in Fig. 4B, the rotor core 2 is placed on the stage 24, and the upper mold 21 is moved downward to hold the rotor core 2 in the mold 20 (step S3). At this time, the upper mold 21 is adjusted so as to press an upper surface of the rotor core 2 with a predetermined pressure, whereby the upper mold 21 and the upper surface of the rotor core 2 can be brought into close contact with each other, and the lower mold 22 and a lower surface of the rotor core 2 can be brought into close contact with each other.

Next, the powdery resin composition P1 is kneaded and conveyed using the extruder 50 (step S4). In this step, as illustrated in Fig. 4B, first, the powdery resin composition P1 is supplied (for example, continuously) from the resin supply source 58 to the supply port 53 of the barrel 51. Subsequently, the motor 59 is driven to rotate the screw 52, and the powdery resin composition P1 supplied to the supply port 53 is conveyed to the carry-out port 54 while being kneaded. At this time, the resin P in the barrel 51 can be heated by operating the barrel heater 55 according to the drive of the motor 59.

The temperature of the powdery resin composition P1 supplied to the supply port 53 rises as the powdery resin composition P1 is conveyed in the barrel 51 due to shear heat generated by the rotation of the screw 52 and heat from the barrel heater 55 described above. Here, it should be particularly noted that the temperature of the resin P conveyed in the barrel 51 is adjusted to be lower than the dissolution completion temperature T2 at which the entire powdery resin composition P1 supplied to the supply port 53 is completely dissolved. Specifically, the temperature of the resin P conveyed in the barrel 51 is preferably adjusted within a temperature range lower than the dissolution completion temperature T2 and including the dissolution start temperature T1 (for example, a temperature range indicated as a first temperature range A1 in Fig. 2). The powdery resin composition P1 conveyed in the barrel 51 in a state in which the temperature of the powdery resin composition P1 is adjusted within the first temperature range A1 is conveyed to the standby space 51A while at least partially changing to a granular resin composition in a lump shape larger than the original particles due to welding of adj acent particles by slight dissolution of surfaces of some of particles constituting the powdery resin composition P1.

The resin kneaded body P2 which has reached the standby space 51A and at least partially contains the granular resin composition can contain a resin in a powder form because dissolution of the entire resin is not completed although at least a part of the resin kneaded body P2 has changed in shape from a powdery shape to a granular shape. In addition, the viscosity of the resin kneaded body P2 includes a viscosity higher than that of the powdery resin composition P1 supplied as a raw material. In addition, the resin kneaded body P2 has lower fluidity than the softened resin P3 described later, and is also maintained in a low temperature state.

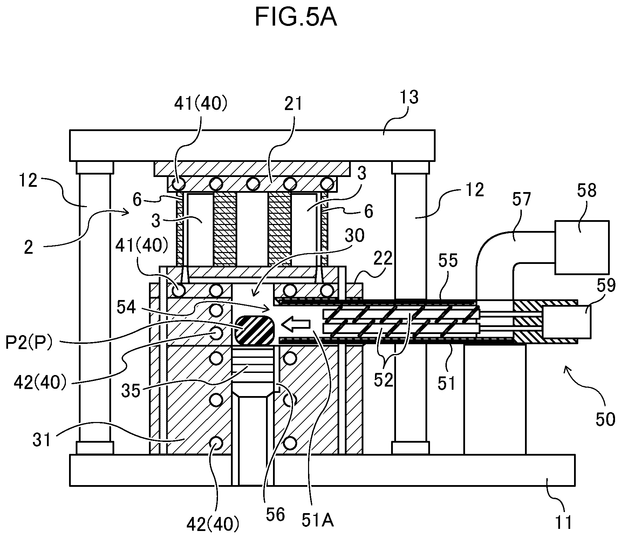

When a predetermined amount of the resin kneaded body P2 is conveyed to the standby space 51A, as illustrated in Fig. 5A, the shutter 56 is opened, and the resin kneaded body P2 temporarily stored in the standby space 51A is carried into the chamber 30 by, for example, operating the screw 52 itself in the conveying direction (step S5). The amount of the resin kneaded body P2 to be carried into the chamber 30 is set in advance in consideration of the volume of the filling space 6 and the like, and the carrying-in amount can be adjusted by cutting and separating the resin kneaded body P2 by a cutting means (not illustrated) disposed in the carry-out port 54 or an operation of opening and closing the shutter 56. Another specific example will be described later for carrying-in of the resin kneaded body P2.

When the resin kneaded body P2 is carried into the chamber 30, the shutter 56 is then closed, and the chamber heater 42 is operated to heat and soften the resin kneaded body P2 (step S6). The chamber heater 42 can be controlled to heat the resin kneaded body P2 in the chamber 30 to, for example, a temperature range in which the viscosity of the resin kneaded body P2 decreases (for example, a temperature range indicated as a second temperature range A2 in Fig. 2). By the heating, the resin kneaded body P2 is completely dissolved and the viscosity of the resin kneaded body P2 decreases, and the resin kneaded body P2 changes to a highly flowable resin (hereinafter, referred to as "softened resin") P3. As described above, in the motor core manufacturing method according to the present embodiment, the completion of the dissolution and the softening of the resin P are delayed until a timing after the resin P is carried into the chamber 30, thereby suppressing a progress of an undesired curing reaction of the resin P.

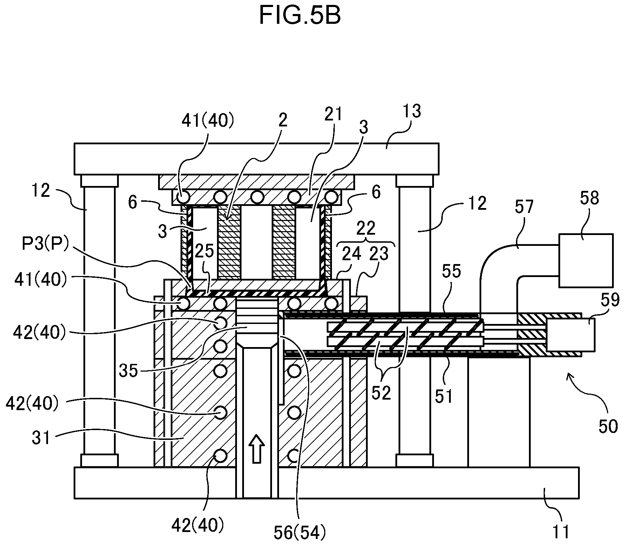

When the resin kneaded body P2 changes to the softened resin P3, next, as illustrated in Fig. 5B, the resin P is filled into the filling space 6 by raising the plunger 35 to push up the softened resin P3 (step S7). The softened resin P3 pushed up by the plunger 35 passes through the resin filling path 25 from the chamber 30 and flows into the filling space 6. Note that, in order to smoothly fill the softened resin P3 into the filling space 6 in step S7, for example, an air hole (not illustrated) for removing air in the filling space 6 may be formed at an appropriate position of the upper mold 21.

When the filling of the softened resin P3 into the filling space 6 is completed, the mold heater 41 is operated to heat and cure the softened resin P3 in the filling space 6 (step S8). When the softened resin P3 is cured, the softened resin P3 is preferably heated by the mold heater 41 for about several minutes in a temperature range in which the viscosity of the softened resin P3 largely increases (for example, a temperature range indicated as a third temperature range A3 in Fig. 2). By the change of the softened resin P3 to the cured resin P4 by the heating, the permanent magnet 3 is fixed in the slot portion 4 of the rotor core 2 by resin molding. Note that the heating time in step S8 can be appropriately adjusted according to the specific composition of the resin P and the like.

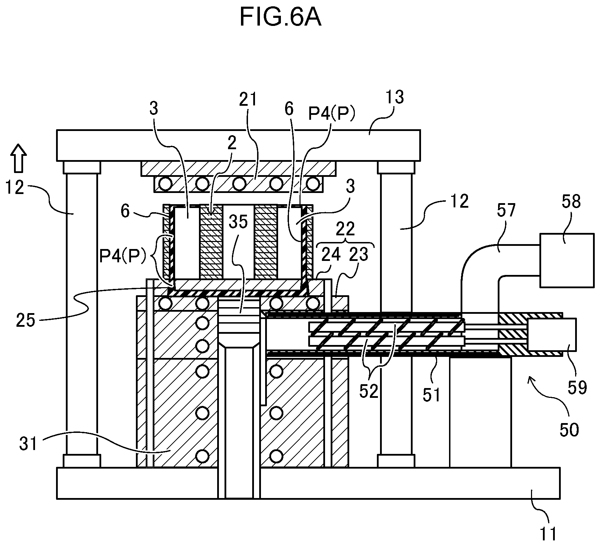

When the series of resin molding processes described above is completed, as illustrated in Fig. 6A, the upper mold 21 is raised, and the resin-molded rotor core 2 is carried out using a conveyance unit (not illustrated) such as a robot arm (step S9). The carried-out rotor core 2 can be transferred to another apparatus, for example, for attachment of a shaft. When the carrying-out of the rotor core 2 is completed, the manufacturing apparatus 1 is cleaned (step S10). The manufacturing apparatus 1 may be cleaned by a cleaning unit (not illustrated) including a cleaning member such as a brush.

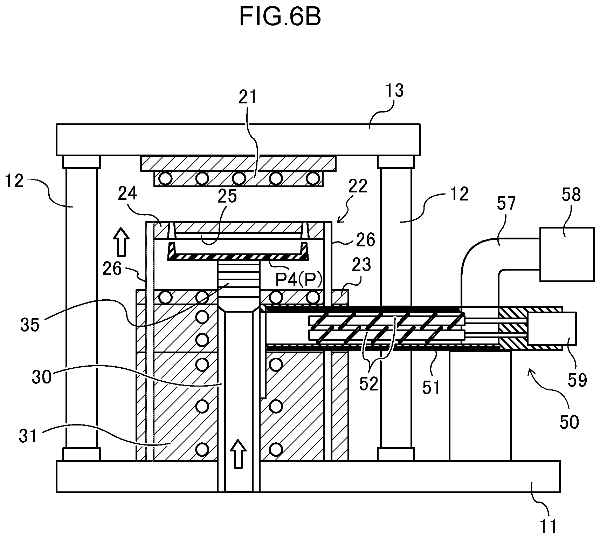

In the cleaning described above, when the resin filling path 25 of the stage 24 is cleaned, the cleaning only needs to be performed as follows. That is, first, the lifter 26 is operated to separate the stage 24 from the lower mold body 23, thereby removing the cured resin P4 closing the resin filling path 25 from the resin filling path 25. Then, the cured resin P4 is also separated from the lower mold body 23 by further raising the plunger 35 (see Fig. 6B). Then, the separated cured resin P4 is gripped by a robot arm (not illustrated) or the like and removed, and surfaces of the stage 24 and the lower mold body 23 and the inside of the resin filling path 25 are cleaned with a brush or the like. When the series of cleaning is completed, the state returns to the state illustrated in Fig. 4A to be in a standby state until the next carrying-in of the rotor core 2.

Note that the order of the series of steps described above can be changed within a range in which functions thereof can be maintained, or can be performed in parallel. For example, the conveyance of the powdery resin composition P1 or the resin kneaded body P2 by the extruder 50 can be started at any timing, for example, in parallel with the step of inserting the permanent magnet 3 into the rotor core 2 or the step of preheating the mold 20 and the rotor core 2. In addition, the preheating of the mold 20, the preheating of the rotor core 2, or the preheating of the resin P using the barrel heater 55 can be appropriately omitted.

In addition, the first to third temperature ranges A1 to A3 described above can be appropriately set in consideration of the material of the resin P and the dissolution start temperature T1 and the dissolution completion temperature T2 specified in relation to the material of the resin P.

As described above, according to the motor core manufacturing method and the motor core manufacturing apparatus 1 capable of performing the method according to the present embodiment, it is possible to suppress a progress of an undesired curing reaction of a resin before the resin is filled into the filling space 6 by suppressing the temperature of the resin P from becoming too high before the resin P is introduced into the chamber 30.

A specific example of a method for adjusting the amount of the resin P to be introduced into the chamber 30 in the motor core manufacturing apparatus 1 and the motor core manufacturing method according to the above-described present embodiment will be described below.

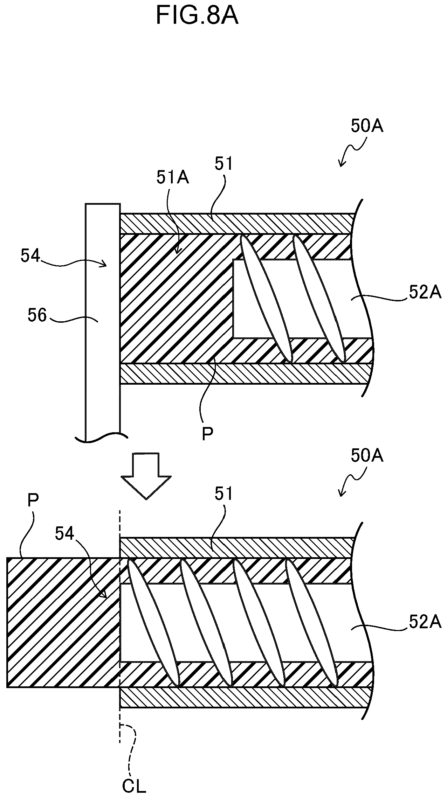

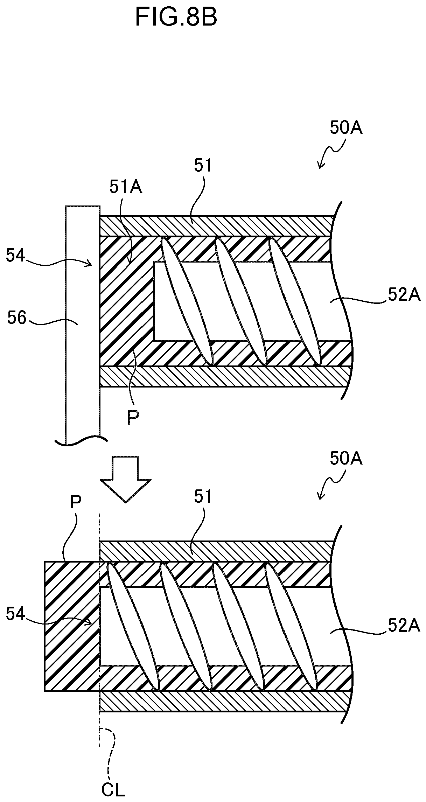

Fig. 8 illustrates a modification of the extruder illustrated in Fig. 1. Fig. 8A is a schematic enlarged view illustrating an enlarged end portion of the extruder when the resin filling amount is large, and Fig. 8B is a schematic enlarged view illustrating an enlarged end portion of the extruder when the resin filling amount is small. In the motor core manufacturing apparatus of the present disclosure, the resin P to be introduced into the chamber 30 may be adjusted using an extruder 50A having the configuration illustrated in Fig. 8. In the extruder 50A according to the present modification, as illustrated in Fig. 8, the screw 52A may be movable along the conveying direction of the resin P by a slide mechanism (not illustrated). Note that, in order to simplify the configuration of the extruder 50A illustrated in Figs. 8A and 8B, the extruder 50A including only one screw 52A is illustrated.

Adjustment of the filling amount of the resin P using the extruder 50A including the slide mechanism described above can be performed by adjusting the position of the screw 52A. Specifically, for example, when the resin filling amount is relatively large, as illustrated in Fig. 8A, first, the screw 52A is slid to adjust the size of the standby space 51A formed between an end of the screw 52A and the carry-out port 54 according to a desired resin filling amount. Next, by rotating the screw 52A to convey the resin P while kneading the resin P, the resin P is carried into the standby space 51A. At this time, by continuously carrying the resin P into the standby space 51A, the resin P is compressed between the shutter 56 and the screw 52A, and the inside of the standby space 51A can be filled with the resin P.

When the carrying-in of the resin P into the standby space 51A and the compression of the resin P are completed by the rotation of the screw 52A, the shutter 56 is opened, and the slide mechanism is operated to move the screw 52A together with the resin P in the conveying direction. Then, when an end of the screw 52A reaches the same position as the carry-out port 54 in the conveying direction, the slide mechanism is stopped, and the resin P is cut along a cutting line CL illustrated in Fig. 8A. The separated resin P can be introduced into the chamber 30.

When the resin filling amount is relatively small, as illustrated in Fig. 8B, the slide mechanism is operated to move an end of the screw 52A to a downstream side in the conveying direction as compared with the case of Fig. 8A, thereby adjusting the standby space 51A to be relatively small. After this adjustment operation, if an operation similar to the operation in the case where the resin filling amount is large described above is performed, a relatively small amount of the resin P can be introduced into the chamber 30.

According to the above adjustment method, the amount of the resin P to be introduced into the chamber 30 can be adjusted by sliding the screw 52A to adjust the size of the standby space 51A. Note that the method for adjusting the resin filling amount can be assumed in addition to the modification described above. For example, in the modification described above, the size of the standby space 51A is adjusted according to the amount of the resin desired to be introduced into the chamber 30. Alternatively, by adjusting the movement amount of the screw 52A by the slide mechanism when the resin P is carried out from the carry-out port 54, the amount of the resin desired to be introduced into the chamber 30 can be adjusted.

Specifically, when the amount of the resin to be introduced into the chamber 30 is large, an end of the screw 52Ais moved to the same position as the carry-out port 54 in the conveying direction when the shutter 56 is opened and the resin P is carried out together with the screw 52A. On the other hand, when the amount of the resin to be introduced into the chamber 30 is small, an end of the screw 52A is moved to a predetermined position upstream of the position of the carry-out port 54 in the conveying direction. In this manner, the amount of the resin P to be introduced into the chamber 30 may be adjusted on the basis of the sliding movement amount of the screw 52 when the resin P is carried out.

Alternatively, although not illustrated, the amount of the resin P to be introduced into the chamber can be substantially adjusted by compressing the resin carried into the standby space using rotational force of the screw. That is, when the amount of the resin to be introduced into the chamber is large, by rotating the screw to relatively increase the amount of the resin to be carried out into the standby space, the resin carried into the standby space may be compressed using rotational force of the screw to form a high-density resin. When the amount of the resin to be introduced into the chamber is small, by rotating the screw to relatively reduce the amount of the resin to be carried out into the standby space, compression action using rotational force of the screw to the resin carried into the standby space may be reduced to form a low-density resin. Note that in this case, the density of the resin in the standby space can be estimated by measuring reaction force acting on the screw.

### (Second embodiment)

In the motor core manufacturing apparatus 1 according to the first embodiment described above, the extruder 50 extending in the left-right direction has been exemplified, but the extending direction of the extruder 50 is not limited thereto. Hereinafter, as a second embodiment of the present disclosure, a motor core manufacturing apparatus 100 including an extruder 150 extending in the vertical direction will be briefly described.

Fig. 9 is a schematic plan view illustrating an example of the motor core manufacturing apparatus according to the second embodiment of the present disclosure. Fig. 10 is a schematic cross-sectional view taken along line A-A in Fig. 9. As illustrated in Figs. 9 and 10, the motor core manufacturing apparatus 100 according to the present embodiment may mainly include: a mold 120 capable of holding a rotor core; a chamber 130 formed in the mold 120 and having one end communicating with a resin filling path 125 communicating with a slot portion 4 of the rotor core 2; a plunger 135 that conveys a resin P in the chamber 130 toward the resin filling path 125; a heater (not illustrated) disposed in the mold 120 or in the mold 120 and around the chamber 130; and an extruder 150 that conveys the resin P while kneading the resin P in order to introduce the resin P into the chamber 130. Note that the contents described in the first embodiment are applied to components similar to those of the motor core manufacturing apparatus 1 according to the first embodiment among various components of the motor core manufacturing apparatus 100 according to the present embodiment, and description thereof will be omitted below.

As illustrated in Fig. 9, a plurality of chambers 130 of the motor core manufacturing apparatus 100 according to the present embodiment may be formed on a turntable 131, for example, four chambers 130 may be formed at equal intervals in a circumferential direction. The turntable 131 can be formed of a disk-shaped member having a predetermined wall thickness, and can be rotated at any timing by a central portion of the turntable 131 being rotatably supported by a rotary support column 132.

A plurality of work areas E1 to E4 may be provided on the turntable 131. Specifically, a first work area E1 for introducing the resin P into the chamber 130 and disposing the rotor core 2 on a lower mold 122, a second work area E2 for injecting the resin P into the slot portion 4 of the rotor core 2 and curing the resin P, a third work area E3 for carrying out the rotor core 2 after completion of the injection and curing of the resin P and cleaning a lower mold 122 and the like, and a fourth work area E4 for performing temperature adjustment and the like of the lower mold 122 and the chamber 130 may be provided. Note that the work content in each work area and the number of work areas are not limited to those described above, and can be appropriately changed.

The mold 120 is a member for holding the rotor core 2, and may include the lower mold 122 disposed above each of the plurality of chambers 130 and the upper mold 121 attached to a top plate 113 of an apparatus body 110 described later. The resin filling path 125 connecting the chamber 130 and the slot portion 4 may be formed in the lower mold 122.

The plunger 135 is movable in the chamber 130 in the vertical direction, and may be disposed in each of the plurality of chambers 130. An actuator (not illustrated) capable of operating the plunger 135 in the vertical direction only needs to be disposed below the second work area E2. In this case, an operation of the plunger 135 disposed in each of the chambers 130 can be implemented by one actuator described above.

The heater may be similar to the first heater 40 described in the first embodiment. For example, the heater may be disposed on the top plate 113 or the turntable 131.

The extruder 150 can be formed of a member extending in the vertical direction. The extruder 150 may include a barrel 151 in which the resin P is conveyed, and a screw 152 that is disposed in the barrel 151 and conveys the resin P (specifically, a powdery resin composition P1) supplied into the barrel 151 downward while kneading the resin P.

The barrel 151 can be formed of a cylindrical member extending in the vertical direction and may be able to form a conveyance path of the resin P. A supply port 153 to which the powdery resin composition P1 is supplied may be formed at an upper end of the barrel 151, and a carry-out port 154 may be formed at the other end. A resin supply path 157 may be connected to the supply port 153. In addition, in the carry-out port 154, for example, a shutter 156 that opens and closes the carry-out port 154 and also functions as a cutter that cuts the resin P may be disposed. In addition, although not illustrated, a barrel heater for preheating the resin P may be disposed in the barrel 151.

The screw 152 may be a long member having a spiral fin formed on an outer peripheral surface thereof and rotated by a motor 159. The screw 152 is disposed in the barrel 151 along an extending direction thereof. In addition, only one screw 152 according to the present embodiment may be disposed in the barrel 151, and the screw 152 itself may be slidable in the vertical direction by a slide mechanism (not illustrated) as described in Figs. 8A and 8B.

A transfer mechanism 190 for transferring the resin P conveyed from the extruder 150 into the chamber 130 in the first work area E1 may be disposed below the carry-out port 154 of the extruder 150. The transfer mechanism 190 may include: a transfer mechanism body 191 formed of a long block body; a rotary support column 192 that rotatably supports an intermediate portion of the transfer mechanism body 191; housing portions 193 that are formed near both ends of the transfer mechanism body 191 in a longitudinal direction and penetrate the transfer mechanism body 191 in the vertical direction; and a bottom lid 194 that openably closes lower ends of the housing portions 193.

The transfer mechanism 190 having the above-described configuration can receive the resin P carried out from the extruder 150 into the housing portion 193 by causing one of the housing portions 193 to stand by in a state of being positioned below the carry-out port 154 of the extruder 150. Note that the resin P temporarily housed in the housing portion 193 may be a resin kneaded body P2 at least partially containing a granular resin composition, the resin kneaded body P2 being temporarily molded into a block shape by being pressed against the shutter 156 in the extruder 150 and pressurized and then cut into a predetermined size by an operation of opening and closing the shutter 156.

When the resin kneaded body P2 is housed in one of the housing portions 193, the transfer mechanism body 191 is rotated to move the housing portion 193 housing the resin kneaded body P2 onto the chamber 130 in the first work area E1. Then, by opening the bottom lid 194, the resin kneaded body P2 can be introduced into the chamber 130. Here, when the above-described resin kneaded body P2 is introduced into the chamber 130, as illustrated in Fig. 9, the other housing portion 193 is preferably positioned below the carry-out port 154 of the extruder 150. With such a configuration, an operation of carrying out the resin kneaded body P2 from the extruder 150 can be continuously performed.

In addition, in the motor core manufacturing apparatus 100 according to the present embodiment, an apparatus body 110 capable of vertically moving the upper mold 121 may be disposed at a position corresponding to the second work area E2. The apparatus body 110 may include a support column 112 extending in the vertical direction, a support plate 114 extending in the horizontal direction from an upper end of the support column 112, a top plate 113 vertically movably attached to the support plate 114, and a motor 115 for moving the top plate 113 in the vertical direction.

Furthermore, in the motor core manufacturing apparatus 100 according to the present embodiment, robot arms 181 and 182 for carrying in and carrying out the rotor core 2 may be disposed in the vicinity of the first work area E1 and the third work area E3, respectively. Furthermore, a cleaning unit 170 that cleans the lower mold 122 and the like after the rotor core 2 is carried out by the robot arm 182 may be disposed in the third work area E3.

In addition, the motor core manufacturing apparatus 100 according to the present embodiment may include a control device 160 for controlling the above-described series of components. Similarly to the control device 60 described above, the control device 160 can be constituted by a known computer.

When a motor core is manufactured using the motor core manufacturing apparatus 100 according to the present embodiment, the manufacturing can be performed by a process similar to that of the motor core manufacturing method described in the first embodiment except that transfer of the resin P and movement of the rotor core 2 between the work areas are additionally performed. Therefore, detailed description is omitted here.

As described above, the motor core manufacturing apparatus 100 according to the present embodiment also adjusts the resin P carried out from the extruder 150 to be the resin kneaded body P2 at least partially containing a granular resin composition. Therefore, it is possible to suppress the temperature of the resin P from becoming too high before the resin P is introduced into the chamber 30, and it is possible to suppress a progress of an undesired curing reaction of the resin before the resin is filled into the filling space 6.

Note that, in the present embodiment described above, the case where the plurality of chambers 130 is disposed on the rotating disk-shaped turntable 131 has been exemplified, but a linear conveying path may be adopted instead of the turntable 131. In addition, in the present embodiment, the case where one turntable 131 and one transfer mechanism 190 are disposed for one extruder 150 has been exemplified, but if two turntables 131 and two transfer mechanisms 190 are disposed side by side, and the resin kneaded body P2 carried out from one extruder 150 is sequentially transferred by the plurality of transfer mechanisms 190, a motor core can be more efficiently manufactured.

The present disclosure is not limited to the above-described embodiments, and various changes can be made without departing from the gist of the present disclosure. These are all included in the technical idea of the present disclosure. In addition, in the present disclosure, each component may include only one element or two or more elements as long as there is no contradiction.

All documents including publications, patent applications, and patents cited herein are hereby incorporated by reference to the same extent as a case where each document is individually specifically indicated and incorporated by reference, and all of the contents thereof are set forth herein.

Use of nouns and similar referents used in connection with the description of the present disclosure (particularly in connection with the following claims) are to be construed to cover both the singular and the plural unless otherwise indicated herein or clearly contradicted by context. The words "comprising", "having", "including", and "containing" are to be construed as open-ended terms (that is, meaning "including **•••** but not limited thereto") unless otherwise noted. Recitation of numerical ranges herein are merely intended to serve as shorthand for referring individually to each value falling within the range unless otherwise indicated herein, and each value is incorporated into herein as if it were individually recited herein. All methods described herein can be performed in any suitable order unless otherwise indicated herein or clearly contradicted by context. Any example or exemplary language (for example, "and the like") used herein is intended merely to better illustrate the present disclosure and does not pose a limitation on the scope of the present disclosure unless otherwise claimed. No language herein should be construed as indicating any non-claimed element as essential to practice of the present disclosure.

Preferred embodiments of the present disclosure are described herein, including the best mode known to the present inventor for carrying out the present disclosure. Variations of these preferred embodiments will be apparent to those skilled in the art upon reading the above description. The present inventor expects skilled persons to apply such variations as appropriate, and expect the present disclosure to be practiced by a method other than the method specifically described herein. Therefore, the present disclosure includes all modifications of the contents of the claims appended hereto and equivalents thereto as permitted by applicable law. Furthermore, any combination of the above elements in all variations is included in the present disclosure unless otherwise indicated herein or clearly contradicted by context.

## Claims

1. A motor core manufacturing method, comprising:
a step of holding a motor core including a resin filling portion in a mold in which a resin filling path is formed such that the resin filling path is communicated with the resin filling portion;
a step of conveying a resin kneaded body at least partially containing a granular resin composition toward a chamber communicated with the resin filling path using an extruder that conveys a powdery resin composition while kneading the powdery resin composition so as to form the resin kneaded body;
a step of heating and softening the resin kneaded body conveyed into the chamber;
a step of operating a plunger movable in the chamber to fill a softened resin obtained by softening the resin kneaded body in the chamber into the resin filling portion; and
a step of curing the softened resin filled in the resin filling portion.

2. The motor core manufacturing method according to claim 1, wherein:
the motor core is configured by a rotor core, and the resin filling portion is configured by at least one slot portion formed along an axial center direction of the rotor core, into which a permanent magnet can be inserted, and
the method further comprises a step of inserting the permanent magnet into the slot portion of the rotor core.

3. The motor core manufacturing method according to claim 1, further comprising a step of heating the powdery resin composition conveyed in the extruder.

4. The motor core manufacturing method according to claim 1, further comprising a step of preheating at least one of the mold or the motor core.

5. A motor core manufacturing apparatus, comprising:
a mold configured to hold a motor core including a resin filling portion;
a chamber formed in the mold and having one end communicated with a resin filling path communicated with the resin filling portion;
an extruder configured to convey a powdery resin composition toward the chamber while kneading the powdery resin composition;
a plunger movable in the chamber;
a heater disposed in the mold and around the chamber; and
a control device configured to control at least the extruder, the plunger, and the heater to perform each step of the motor core manufacturing method according to any one of claims 1 to 4.
